# EUROPÄISCHE PATENTSCHRIFT

(11) **EP 1 318 526 B1**
(45) Veröffentlichungstag und Bekanntmachung des Hinweises auf die Patenterteilung: **14.03.2012**
(21) Anmeldenummer: 02026647.4
(22) Anmeldetag: 29.11.2002
(51) Int. Cl.: C08F 255/00, C08F 291/00, C08F 230/08, H01B 3/44, H01B 3/46

(54) **Verwendung flüssiger oder auf Trägermaterial aufgebrachter ungesättigter Organosilan/-mischungen zur Herstellung von feuchtigkeitsvernetzten und gefüllten Kabelcompounds**
Use of liquid unsaturated organosilane (mixtures) or unsaturated organosilane mixtures applied to a carrier for producing moisture-crosslinked and filled cablecompounds
Utilisation d'organosilanes insaturés liquides ou sur un support pour la préparation de compositions pour cables réticulables par l'humidité et comprenant des matières de charge

(30) Priorität: 06.12.2001 DE 10159952
(43) Veröffentlichungstag der Anmeldung: 11.06.2003
(73) Patentinhaber: Evonik Degussa GmbH, 45128 Essen (DE)
(72) Erfinder: Schlosser, Thomas, Dr., 79594 Inzlingen (DE); Mack, Helmut, Dr., 79618 Rheinfelden (DE); Ioannidis, Aristidis, 79618 Rheinfelden (DE)

(56) Entgegenhaltungen:
- EP-A- 0 402 904
- EP-A- 0 520 474
- GB-A- 2 119 387
- US-A- 4 550 056

## Beschreibung

Die Erfindung betrifft die Verwendung von flüssigen oder geträgerten, ungesättigten Organosilanen für Kabelcompounds, die ein thermoplastisches Basispolymer und einen verstärkenden, streckenden oder flammhemmenden mineralischen Füllstoff enthalten. Die Erfindung betrifft weiterhin Kabelcompounds als solche sowie Kabel mit Isolierungen oder Ummantelungen aus solchen Kabelcompounds.

Unter gefüllten Kabelcompounds versteht man Stoffmischungen, die ein thermoplastisches Basispolymer sowie anorganische bzw. mineralische verstärkende, streckende oder flammschützende Füllstoffe enthalten und verwendet werden, um metallische Leiter elektrisch isolierend zu umhüllen.

Es ist bekannt, dass ein Zusatz von funktionellen Organylorganyloxysilanen das Dispergieren des Füllstoffs im Basispolymer erleichtert und die Haftung zwischen Basispolymer und Füllstoff verbessert. Funktionelle Organylorganyloxysilane sind in diesem Zusammenhang solche Silane, die einen über ein Kohlenstoffatom an das Siliciumatom gebundenen organischen Rest tragen, der seinerseits eine funktionelle Gruppe enthält. Die leichtere Dispergierung dürfte auf eine durch das Silan bewirkte Hydrophobierung der Oberfläche der Füllstoffteilchen zurückzuführen sein. Die bessere Haftung führt zu besseren mechanischen Eigenschaften der Kabelumhüllung.

Es ist auch bekannt, dass man bei der Herstellung feuchtigkeitsvernetzbarer Polymere Silane in Gegenwart einer Erzeugersubstanz von Radikalen (ESR) auf Polymerketten pfropfen kann und anschließend, nach der Formgebung, die Feuchtigkeitsvernetzung durchführt. Verfahren dieser Art sind unter den Namen Sioplas^{®}-Prozess (DE 19 63 571 C3, DE 21 51 270 C3) und Monosil^{®}-Prozess (DE 25 54 525 C3) bekannt. Die chemische Modifizierung der Polymere erfolgt durch Ankopplung (Pfropfung) der ungesättigten Silanester an die Polymerkette über radikalische Addition. Dabei wird zunächst verfahrenstechnisch eine Homogenisierung der Einsatzstoffe angestrebt, wobei die Degradation der ESR in dieser Phase unerwünscht ist. Über eine temperaturkontrollierte Verarbeitung wird die Zerfallsreaktion geregelt. Die Vernetzung der einzelnen Polymerketten erfolgt anschließend durch Hydrolyse der Silanestergruppen sowie Kondensation der gebildeten Silanoleinheiten. Diese abschließende Vernetzung wird durch einen Vernetzungskatalysator beschleunigt und in bekannter Weise entweder im Wasserbad oder im Dampfbad durchgeführt oder aber durch Luftfeuchtigkeit bei Umgebungstemperatur initiiert (so genanntes "ambient curing"). Während beim Monosil-Verfahren der Vernetzungskatalysator bereits beim ersten Verarbeitungsschritt zugesetzt wird, erfolgt beim Sioplas-Verfahren der Zusatz des Vernetzungskatalysators erst im zweiten Schritt. Die Feuchtigkeitsvernetzung von ungefüllten Polymeren mit hydrolysierbaren ungesättigten Silanen wird weltweit zur Herstellung von Kabeln, Rohren, Schäumen usw. eingesetzt. Die Vernetzung der ungefüllten Polymere bewirkt eine deutliche Erhöhung der Wärmeformbeständigkeit der Isolierung (verglichen mit unvernetztem Isolationsmaterial aus Polyolefinen), die auch im Falle eines Kurzschlusses kurzzeitig Temperaturspitzen in der Isolierung abfangen kann und somit die Funktion der Kabelisolierung aufrecht erhalten wird. Die Verwendung von ungesättigten Organosilanen für die Herstellung von feuchtigkeitsvernetzten und gefüllten Kabelcompounds ist bisher nicht beschrieben.

Die Verwendung flüssiger Additive kann jedoch für die Anwender u. U. insofern problematisch sein, als die üblichen Einrichtungen zum Wiegen und Dosieren kleiner Mengen von Additiven nur für Feststoffe ausgelegt sind. Flüssige Kleinkomponenten müssen deshalb z. T. manuell verwogen und dosiert werden. Dies ist in der Regel mit höheren Kosten verbunden und stellt eine zusätzliche Fehlerquelle dar.

Eine bekannte Lösung dieses Problems besteht darin, flüssige funktionelle Organosilane an hochadsorbierende oder -absorbierende Feststoffe zu binden, die dann als trockene Flüssigkeiten ( "dry liquids") mit den üblichen Einrichtungen ohne weiteres gewogen und zudosiert werden können.

So beschreibt DE 195 03 779 A1 eine Kombination aus Kieselsäure und trans-Polyoctenamer als Trägerstoff für flüssige Kautschukchemikalien, darunter Vinyl- und Mercaptosilane sowie Schwefelsilane.

In DE 44 35 311 A1 werden so genannte Verstärkungsadditive aus oligomeren und/oder polymeren schwefelhaltigen Organylorganyloxysilanen und halbaktiven, aktiven und/oder hochaktiven Rußen als Trägerstoff beschrieben, die sich zur Verwendung in Kautschukmischungen oder -massen sowie in Kunststoffmischungen eignen. In den beiden zuvor genannten Schriften werden allerdings Kabelcompounds nicht erwähnt.

EP 0 426 073 B1 offenbart ein Verfahren, bei dem man ein Basispolymer, ein schwammartiges Polymer oder ein quellbares Polymer mit einem darin enthaltenen (Meth)acryloxy-funktionellen Organosilan und einen freie Radikale liefernden Stoff mischt und die Mischung aufschmilzt und homogenisiert. Auch dieses Verfahren ist nicht auf die Verwendung für feuchtigkeitsvernetzbare, gefüllte Kabelcompounds gerichtet.

WO 97/07165 lehrt, dass die dort beschriebenen festen Mischungen aus funktionellen Organosilanen und bestimmten großoberflächigen Kieselsäuren mit niedriger Oberflächenenergie u. a. bei der Isolierung von Drähten und Kabeln eingesetzt werden können.

EP 0 520 474 A1 offenbart polymere Isolationszusammensetzungen, die chemisch vernetzt sind und mit denen wärmebeständige und flammbeständige Produkte hergestellt werden können, die zum Beschichten von Draht- und Kabelprodukten geeignet sind.

EP 0 402 904 A2 betrifft ebenfalls eine Isolationszusammensetzung auf der Basis eines organischen Elastomers für die Herstellung von Kabel, wobei u. a. neben einem organischen Peroxid, einem flüssigen ungesättigten Silikon auch ein Metallhydroxid als flammhemmende Komponente eingesetzt wird. Demgegenüber kommen in US 4,550,056 u. a. Vinylalkoxysilane bzw. -siloxanoligomere zum Einsatz.

GB 2119387 A beschreibt eine Füllstoff enthaltende, vernetzte Zusammensetzung aus Ethylen-Vinylester-Copolymer, die durch Einbeziehung eines Doppelgleitmittel-Systems, umfassend eine Fettsäure und ein Ethylen-bis-amid, eine flammhemmende Wirkung besitzt.

Des Weiteren ist die Verwendung von funktionellen Organylorganyloxysilanen auf Trägerstoffen als Haftvermittler in mineralstoffgefüllten Compounds bekannt, beispielsweise in so genannten HFFR-Compounds (HFFR = halogen free retardeant) für halogenfreie Flammschutzanwendungen (EP 1 063 655 A1). HFFR-Compounds werden in der Regel als Granulat für die Herstellung gefüllter Kabel eingesetzt. Dabei ist jedoch von Nachteil, dass die gefüllten, gegebenenfalls silanhaltigen Compounds keine Wärmeformbeständigkeit aufweisen.

Es bestand nun die Aufgabe, eine weitere Möglichkeit zur Herstellung von gefüllten Kabelcompounds, d. h. gefüllte Kabel bereitzustellen, insbesondere solche für halogenfreie Flammschutzanwendungen mit einer verbesserten Wärmeformbeständigkeit.

Die gestellte Aufgabe wird erfindungsgemäß entsprechend den Angaben der Patentansprüche gelöst.

Es wurde nun überraschenderweise gefunden, dass mit flüssigen ungesättigten Organosilanen oder entsprechenden organosilanhaltigen Zubereitungen, welche als weitere Komponenten ESR sowie einen Vernetzungskatalysator enthalten können, die gefüllten Kabelcompounds feuchtigkeitsvernetzt werden und die so resultierenden Kabel eine deutlich höhere Wärmeformbeständigkeit aufweisen als unvernetzte HFFR-Compounds.

Ebenso wurde überraschenderweise gefunden, dass dieses Ziel erreicht wird, wenn die flüssigen ungesättigten Organosilane in Form eines "Dry-liquids" auf einem Trägermaterial, wie pyrogener Kieselsäure, Fällungskieselsäure, Ca-silicat, poröse Polymere, Wachse oder Ruß, zur Vernetzung von gefüllten Kabelcompounds eingesetzt werden.

Des Weiteren wurde überraschenderweise gefunden, dass insbesondere bei Verwendung von Vinyltriethoxysilan (VTEO) die häufig nachteilig auftretende Bildung von Schaum, Blasen, inhomogener Oberfläche etc. stark reduziert bzw. vollständig vermieden werden kann.

Gegenstand der vorliegenden Erfindung ist daher die Verwendung mindestens eines auf einem Trägerstoff gebundenen, ungesättigten Organosilans oder einer Zubereitung, die (i) mindestens ein auf einem Trägerstoff gebundenes, ungesättigtes Organosilan, (ii) mindestens ein Peroxid und (iii) gegebenenfalls einen Vernetzungs-, Hydrolyse- bzw. Kondensationskatalysator (auch kurz Vernetzungskatalysator genannt) enthält, für die Herstellung feuchtigkeitsvernetzter und gefüllter Kabelcompounds, welche ein thermoplastisches, polare oder unpolare funktionelle Gruppen tragendes Basispolymer (nachfolgend kurz thermoplastisches Basispolymer genannt) und einen verstärkenden, streckenden oder flammhemmenden anorganischen bzw. mineralischen Füllstoff (nachfolgend auch kurz als mineralischer Füllstoff bezeichnet) enthalten, wobei der Trägerstoff für das ungesättigte Organosilan ein poröses Polymer ist, ausgewählt aus der Reihe Polypropylen, Polyolefine, Etylen-Copolymer mit an Kohlenstoff armen Alkenen, Ethylen-Vinylacetat-Copolymer, Polyethylen mit hoher Dichte, Polyethylen mit geringer Dichte oder linearem Polyethylen mit geringer Dichte und das poröse Polymer ein Porenvolumen von 30 bis 90 % aufweist, oder der Trägerstoff für die Organosilankomponente eine pyrogene Kieselsäure, eine gefällte Kieselsäure, Calciumsilikat, ein Wachs oder Ruß ist.

Bei der Herstellung eines erfindungsgemäß feuchtigkeitsvernetzten, gefüllten Kabelcompounds, d. h. der Herstellung eines entsprechenden Kabels oder einer Kabelummantelung durch Extrusion, setzt man vorzugsweise
(a) mindestens ein thermoplastisches Basispolymer, eine ESR, einen mineralischen Füllstoff, einen Vernetzungskatalysator und ein ungesättigtes Organosilan
   oder
(b) mindestens ein thermoplastisches Basispolymer, einen mineralischen Füllstoff, einen Vernetzungskatalysator und eine Organosilan- und ESR-haltige Zubereitung oder
(c) mindestens ein thermoplastisches Basispolymer, einen mineralischen Füllstoff und eine Organosilan-, ESR- und Vernetzungskatalysator-haltige Zubereitung oder
(d) mindestens ein bereits gefülltes, gegebenenfalls silanhaltiges Compound eines thermoplastischen Basispolymers, eine ESR, einen Vernetzungskatalysator und ein ungesättigtes Organosilan
   oder
(e) mindestens ein bereits gefülltes, gegebenenfalls silanhaltiges Compound eines thermoplastischen Basispolymers, einen Vernetzungskatalysator und eine Organosilan- und ESR-haltigen Zubereitung
   oder
(f) mindestens ein bereits gefülltes, gegebenenfalls silanhaltiges Compound eines thermoplastischen Basispolymers und eine Organosilan-, ESR- und Vernetzungskatalysator-haltige Zubereitung
   als Eduktkomponenten ein.

So ist auch Gegenstand der vorliegenden Erfindung ein Verfahren zur Herstellung eines feuchtigkeitsvernetzten, gefüllten Kabelcompounds mit einer verbesserten Wärmeformbeständigkeit, das ein thermoplastisches Basispolymer und einen mineralischen Füllstoff enthält und bei dessen Herstellung mindestens ein auf einem Trägerstoff gebundenes, ungesättigtes Organosilan oder eine Zubereitung, die (i) mindestens ein auf einem Trägerstoff gebundenes, ungesättigtes Organosilan, (ii) mindestens eine Erzeugersubstanz für freie Radikale (ESR) und (iii) gegebenenfalls einen Vernetzungskatalysator enthält, verwendet wird, indem man
- mindestens ein thermoplastisches Compound und einen mineralischen Füllstoff oder mindestens ein bereits gefülltes, gegebenenfalls silanhaltiges, thermoplastisches Compound und
- mindestens einen Vernetzungskatalysator, mindestens eine ESR und mindestens ein ungesättigtes Organosilan oder eine entsprechende Zubereitung aus den genannten Komponenten ungesättigtes Organosilan, ESR und/oder Vernetzungskatalysator einer Extrusionseinheit zuführt, gegebenenfalls weitere Komponenten zusetzt,
- die Extrusion, gegebenenfalls unter Zuführung eines metallischen Leiters oder Leiterbündel, durchführt und
- das Extrudat in Gegenwart von Feuchtigkeit vernetzt
wobei der Trägerstoff für das ungesättigte Organosilan ein poröses Polymer ist, ausgewählt aus der Reihe Polypropylen, Polyolefine, Etylen-Copolymer mit an Kohlenstoff armen Alkenen, Ethylen-Vinylacetat-Copolymer, Polyethylen mit hoher Dichte, Polyethylen mit geringer Dichte oder linearem Polyethylen mit geringer Dichte und das poröse Polymer ein Porenvolumen von 30 bis 90 % aufweist, oder der Trägerstoff für die Organosilankomponente eine pyrogene Kieselsäure, eine gefällte Kieselsäure, Calciumsilikat, ein Wachs oder Ruß ist.

Weiterhin sind Gegenstand der vorliegenden Erfindung Kabel, deren metallische Leiter mit einem erfindungsgemäßen feuchtigkeitsvernetzten und gefüllten Kabelcompound isoliert oder bereits isolierte Teiladern/Leiterbündel damit umhüllt und erfindungsgemäß erhältlich sind.

Ungesättigte Organosilane, die zur Pfropfung auf ein Polymer und anschließender Feuchtigkeitsvernetzung im Sinne der vorliegenden Erfindung geeignet sind, und somit in vorteilhafter Weise zur Herstellung von feuchtigkeitsvernetzten und gefüllten Kabelcompounds, genügen folgender Formel:

H₂C=C(R') (COO)x (CₙH₂ₙ)_{y} SiR₃

worin
R' einen Wasserstoff oder eine Methylgruppe darstellt;
x gleich 0 oder 1 und y gleich 0 oder 1 sind, mit der Maßgabe, y ist gleich1, wenn x gleich 1 ist; und
n eine ganze Zahl von 1 bis 12 bedeutet;

Gruppen R gleich oder verschieden sind und R eine Gruppe aus der Reihe Alkoxy mit 1 bis 12 C-Atomen, beispielsweise Methoxy, Ethoxy, Aryloxy, beispielsweise Phenoxy, Aralkyloxy, beispielsweise Benzyloxy, aliphatischem Acyloxy mit 1 bis 12 C-Atomen, beispielsweise Acetyloxy, Oximo, Alkylamino, Arylamino oder eine lineare, verzweigte oder cyclische Alkylgruppe mit 1 bis 6 Kohlenstoffatomen ist und maximal eine Gruppe R der drei R-Gruppen ein Alkyl und mindestens eine Gruppe R der drei R-Gruppen eine hydrolysierbare organische Gruppe ist.

Besonders bevorzugte Beispiele erfindungsgemäß verwendeter ungesättigter Organosilane sind:
Vinyltrimethoxysilan (VTMO), Vinyltriethoxysilan (VTEO), Vinyltri-i-propoxysilan, Allyltriethoxysilan, Vinyl-tri-n-butoxysilan, 3-Methacryloxypropyltrimethoxysilan (MEMO) oder Mischungen daraus.

Bevorzugt geeignete Organosilane zur Herstellung feuchtigkeitsvernetzter und gefüllter Kabelcompounds enthalten entweder eine Vinyl- oder eine Methacryl-Gruppe, da beide Gruppen gegenüber freien Radikalen reaktiv und zur Pfropfung auf eine Polymerkette geeignet sind, insbesondere DYNASYLAN^{®} VTMO, VTEO sowie MEMO.

Ungesättigte Organosilane kann man erfindungsgemäß auch in Verbindung mit Alkylalkoxysilanen, Fluoralkylalkoxysilanen und/oder Aminosilanen einsetzen, beispielsweise Propyltrialkoxysilane, Octyltrialkoxysilane, Hexadecyltrialkoxysilane, Tridecafluor-1,1,2,2-tetrahydrooctyltrialkoxysilane, 3-Aminopropyltrialkoxysilane, wobei Alkoxy insbesondere für Methoxy oder Ethoxy steht, um nur einige Beispiele zu nennen.

Die Menge an eingesetztem ungesättigten Organosilan wird im Allgemeinen so gewählt, dass sie nahe am Minimumgehalt ist, zur Erzielung des gewünschten Vernetzungsgrades. Der Gehalt an hydrolysierbarem ungesättigten Organosilan liegt vorzugsweise, bezogen auf das zu vernetzende Kabelcompound, zwischen 0,1 und 10 Gew.-%, bevorzugt zwischen 0,5 und 3 Gew.-%.

Erzeugersubstanzen von Radikalen (ESR), die für die Herstellung erfindungsgemäßer, feuchtigkeitsvernetzter und gefüllter Kabelcompounds geeignet sind, sind in der Regel alle organischen Verbindungen, die unter den gegebenen Herstellbedingungen freie Radikale mit geeigneter Halbwertszeit erzeugen können. Bevorzugte ESR sind organische Peroxide und Perester, wie z. B. tert.-Butylperoxypivalat, tert.-Butylperoxy-2-ethylhexanoat, Dicumylperoxid, Di-tert.-butylperoxid, tert.-Butylcumylperoxid, um nur einige zu nennen.

Die am meisten bevorzugten ESR sind organische Peroxide, wie Dicumylperoxid und tert.-Butylcumylperoxid.

Die Menge an eingesetztem ESR ist erfahrungsgemäß nicht gänzlich unkritisch, kann aber trotzdem über weite Bereiche gewählt werden, z. B. zwischen 0,005 und 0,4 Gew.-%, bevorzugt zwischen 0,01 und 0,1 Gew.-%, bezogen auf den zu vernetzenden Kabelcompound. Diese Menge ist aber auch abhängig vom zu vernetzenden Kabelcompound, Organosilan, Anwesenheit von Stabilisator etc.

Der Hydrolyse-/Kondensations-Katalysator in der vorliegenden Erfindung katalysiert üblicherweise die Vernetzung des Extrudats mit Wasser. Die Katalysatoren können entweder die Hydrolysereaktion der gepfropften Silylgruppen zu Silanolen beschleunigen, oder die Kondensationsreaktion der Silanolgruppen zu Siloxanbindungen, oder aber beides. Diese Katalysatoren können Lewis-Säuren sein, wie z. B. Metallcarboxylate, wie Dibutylzinndilaurat, Dioctylzinndilaurat, Zinnacetat, Zinnoctoat, Dibutylzinndioctoat, oder auch Organometallverbindungen, z. B. Titanester und Titanchelate, organische Basen, wie Triethylamin, Hexylamin, Dibutylamin, Piperidin, oder protische Säuren, wie Fettsäuren und mineralische Säuren. Bevorzugte Katalysatoren enthalten Dibutylzinndilaurat (DBTL), Dioctylzinndilaurat (DOTL) und Zinnoctoat.

Die Menge an eingesetztem Hydrolyse-/Kondensations-Katalysator kann über weite Bereiche gewählt werden, beispielsweise zwischen 0,005 und 0,2 Gew.-%, bevorzugt zwischen 0,01 und 0,1 Gew.-%, bezogen auf dem zu vernetzenden Kabelcompound. Auch die Menge an Hydrolyse-/Kondensationskatalysator ist in der Regel abhängig vom zu vernetzenden Kabelcompound, dem Organosilan sowie gegebenenfalls den übrigen Komponenten.

Zusätzlich zu ungesättigtem Organosilan, ESR, Vernetzungskatalysator können bei der vorliegenden Erfindung weitere Komponenten bzw. Additive eingesetzt werden, die üblicherweise auch bei der Feuchtigkeitsvernetzung ungefüllter Systeme Verwendung finden. Diese beinhalten im Allgemeinen jede Art von Antioxidantien, Hitzestabilisatoren, Metalldesaktivatoren, sowie jede Art von Prozesshilfsmitteln, beispielsweise Siliconöl, Stearinsäure, Wachse, Alkylsilane, Fluororganosilane sowie Mischungen daraus.

Die Menge an zusätzlich eingesetzten Additiven kann über einen weiten Bereich gewählt werden, beispielsweise zwischen 0,025 und 0,5 Gew.-%, bevorzugt zwischen 0,05 und 0,2 Gew.-%, bezogen auf den zu vernetzenden Kabelcompound. Aber auch die Menge an Additiven ist in der Regel abhängig vom zu vernetzenden Kabelcompound, Organosilan sowie gegebenenfalls den übrigen Komponenten.

Als Trägerstoffe für die Organosilane eignen sich bei der vorliegenden Erfindung im Allgemeinen eine Vielzahl von an sich als Trägerstoffe bekannten Materialien. Im Einzelnen seien als bevorzugte Trägerstoffe erwähnt:
- Pyrogene Kieselsäure, die im großtechnischen Maßstab durch kontinuierliche Hydrolyse von Siliciumtetrachlorid in einer Knallgasflamme hergestellt wird. Dabei wird das Siliciumtetrachlorid verdampft und reagiert anschließend innerhalb der Flamme mit dem aus der Knallgasreaktion stammenden Wasser spontan und quantitativ. Die pyrogene Kieselsäure ist eine amorphe Modifikation des Siliciumdioxids in Form eines lockeren, bläulichen Pulvers. Die Teilchengröße liegt üblicherweise im Bereich von wenigen Nanometern, die spezifische Oberfläche ist daher groß und beträgt im Allgemeinen 50 bis 600 m²/g. Die Aufnahme der Vinylalkoxysilane/-mischungen beruht dabei im Wesentlichen auf Adsorption.
- Fällungskieselsäuren werden im Allgemeinen aus Natronwasserglas-Lösungen durch Neutralisation mit anorganischen Säuren unter kontrollierten Bedingungen hergestellt Nach Abtrennung von der flüssigen Phase, Auswaschen und Trocknen wird das Rohprodukt feingemahlen, z. B. in Dampfstrahlmühlen. Auch Fällungskieselsäure ist ein weitgehendes amorphes Siliciumdioxid, das in der Regel eine spezifische Oberfläche von 50 bis 150 m²/g besitzt. Fällungskieselsäure weist im Gegensatz zur pyrogenen Kieselsäure eine gewisse Porosität auf, beispielsweise rd. 10 Vol.-%. Die Aufnahme der Vinylalkoxysilane/mischungen kann daher sowohl durch Adsorption an der Oberfläche als auch durch Absorption in den Poren erfolgen.

- Calciumsilikat wird technisch im Allgemeinen durch Zusammenschmelzen von Quarz oder Kieselgur mit Calciumcarbonat bzw. -oxid oder durch Fällung von wässrigen Natriummetasilikat-Lösungen mit wasserlöslichen Calciumverbindungen hergestellt. Das sorgfältig getrocknete Produkt ist in der Regel porös und kann Wasser oder Öle bis zur fünffachen Gewichtsmenge aufnehmen.
- Poröse Polyolefine, wie Polyethylen (PE) oder Polypropylen (PP) sowie Copolymere, wie Ethylen-Copolymere mit an Kohlenstoff armen Alkenen, beispielsweise Propen, Buten, Hexen, Octen, oder Ethylenvinylacetat (EVA), werden durch spezielle Polymerisationstechniken und -verfahren hergestellt. Die Teilchengrößen liegen im Allgemeinen zwischen 3 und < 1 mm, und die Porosität kann über 50 Vol.-% betragen, sodass die Produkte geeigneterweise große Mengen an ungesättigten Organosilan/-mischungen zu absorbieren vermögen, ohne ihre Freifließ-Eigenschaften zu verlieren.
- Als Wachse eignen sich insbesondere Polyolefinwachse auf Basis von "low density Polyethylen" (LDPE), vorzugsweise verzweigt, mit langen Seitenketten. Der Schmelz- und Erstarrungspunkt liegt in der Regel zwischen 90 und 120 °C. Die Wachse lassen sich in der Regel in einer niedrigviskosen Schmelze gut mit den Vinylalkoxysilan/-mischungen mischen. Die erstarrte Mischung ist im Allgemeinen hinreichend hart, sodass sie granuliert werden kann.
- Ruß in seinen verschiedenen Handelsformen eignet sich z. B. zur Herstellung von schwarzen Kabelummantelungen. Ruß wird hauptsächlich in Verbindung mit schwefelhaltigen Silanen verwendet.

Zur Herstellung der "dry liquids", beispielsweise aus Vinylalkoxysilan/-mischungen und Trägerstoffen, stehen unter anderem folgende Methoden zur Verfügung:
- Mineralische Träger oder poröse Polymere werden in der Regel vorgewärmt, z. B. in einem Wärmeschrank auf 60 °C, und in einen zylindrischen Behälter gegeben, der mit trockenem Stickstoff gespült und gefüllt wurde. Im Allgemeinen werden anschließend die Vinylalkoxysilane/-mischungen zugegeben und der Behälter in eine Rollvorrichtung gelegt, durch die er ca. 30 Minuten lang in Rotation versetzt wird. Nach dieser Zeit hat sich üblicherweise aus dem Trägerstoff und den flüssigen Vinylalkoxysilane/-mischungen ein rieselfähiges, oberflächlich trockenes Granulat gebildet, das zweckmäßig unter Stickstoff in lichtundurchlässigen Behältern gelagert wird. Alternativ kann man den erwärmten Trägerstoff in einen mit trockenem Stickstoff gespülten und gefüllten Mischer, z. B. einen Pflugscharmischer vom Typ LÖDIGE oder einen Propellermischer vom Typ HENSCHEL, geben. Das Mischwerk kann nun in Betrieb genommen und die Vinylalkoxysilane/-mischungen nach Erreichen der maximalen Mischleistung über eine Düse eingesprüht werden. Nach beendeter Zugabe wird im Allgemeinen noch ca. 30 Minuten homogenisiert und danach das Produkt, z. B. mittels einer mit trockenem Stickstoff betriebenen pneumatischen Förderung, in lichtundurchlässige, mit Stickstoff gefüllte Behälter abgefüllt.
- Wachs/Polyethylenwachs in pelletierter Form mit einem Schmelzpunkt von 90 bis 120°C kann in einem beheizbaren Gefäß mit Rührer, Rückflusskühler und Flüssigkeitszugabevorrichtung portionsweise aufgeschmolzen und im schmelzflüssigen Zustand gehalten werden. Während des gesamten Herstellprozesses wird geeigneterweise trockener Stickstoff durch die Apparatur geleitet. Über die Flüssigkeitszugabevorrichtung können nach und nach die flüssigen Vinylalkoxysilan/-mischungen in die Schmelze gegeben und durch intensives Rühren mit dem Wachs vermischt werden. In der Regel wird danach die Schmelze zum Erstarren in Formen abgelassen, und das erstarrte Produkt wird granuliert. Alternativ kann man die Schmelze auf ein gekühltes Formband auftropfen lassen, auf dem sie in gebrauchsfreundlicher Pastillenform erstarrt. Bevorzugt setzt man bei der vorliegenden Erfindung ein thermoplastisches Basispolymer für die Kabelcompounds ein. Der Thermoplast kann polare Gruppen tragen oder aber unpolar sein, insbesondere reine PE-Typen, wie LD-PE, LLD-PE, m-PE. Polare Gruppen tragende Basispolymere ergeben z. B. ein verbessertes Brandverhalten, d. h. geringere Entflammbarkeit und Rauchgasdichte, und erhöhen das Füllstoffaufnahmevermögen. Polare Gruppen sind z. B. Hydroxyl-, Nitril-, Carbonyl-, Carboxyl-, Acyl-, Acyloxy-, Carboalkoxygruppen oder Aminogruppen sowie Halogenatome, insbesondere Chloratome. Nicht polar sind olefinische Doppelbindungen oder C-C-Dreifachbindungen. Geeignete Polymere sind neben Polyvinylchlorid Copolymere aus einem oder mehreren Olefinen und einem oder mehreren Comonomeren, die polare Gruppen enthalten, z. B. Vinylacetat, Vinylpropionat, (Meth)acrylsäure, (Meth)acrylsäuremethylester, (Meth)acrylsäureethylester, (Meth)acrylsäurebutylester, Acrylnitril. In den Copolymeren finden sich die polaren Gruppen im Allgemeinen in Mengen von 0,1 bis 50 Mol-%, vorzugsweise von 5 bis 30 Mol-%, bezogen auf die Polyolefinbausteine. Besonders geeignete Basispolymere sind Ethylen-Vinylacetat-Copolymere (EVA). Beispielsweise enthält ein geeignetes handelsübliches Copolymer 19 Mol-% Vinylacetat- und 81 Mol-% Ethylenbausteine.

Die Füllstoffe sind im Allgemeinen anorganisch oder mineralisch und können in vorteilhafter Weise verstärkend, streckend sowie flammhemmend sein. Sie tragen zumindest auf ihren Oberflächen Gruppen, die mit den Alkoxygruppen der ungesättigten Organosilan/-mischungen reagieren können. Im Ergebnis kann dadurch das Siliciumatom mit der daran gebundenen funktionellen Gruppe auf der Oberfläche chemisch fixiert werden. Solche Gruppen auf der Oberfläche des Füllstoffs sind insbesondere Hydroxylgruppen. Bevorzugte Füllstoffe sind dementsprechend Metallhydroxide mit stöchiometrischem Anteil oder, in ihren unterschiedlichen Entwässerungsstufen, mit substöchiometrischem Anteil an Hydroxylgruppen bis hin zu Oxiden mit vergleichsweise wenigen restlichen, aber durch DRIFT-IR-Spektroskopie nachweisbaren Hydroxylgruppen. Beispiele für geeignete Füllstoffe sind Aluminiumtrihydroxid (ATH), Aluminiumoxidhydroxid (AlOOH·aq), Magnesiumdihydroxid (MDH), Brucit, Huntit, Hydromagnesit, Glimmer und Montmorillonit. Ferner kann man hier als Füllstoff Kalziumcarbonat, Talkum sowie Glasfasern einsetzen. Des Weiteren können so genannte "char former", wie Ammoniumpolyphosphat, Stannate, Borate, Talk, oder solche in Kombination mit anderen Füllstoffen eingesetzt werden.

Im Allgemeinen stellt man erfindungsgemäß feuchtigkeitsvernetzte und gefüllte Kabelcompounds durch Mischen der jeweiligen Eduktkomponenten in der Schmelze her, zweckmäßig unter Feuchtigkeitsausschluss. Dafür eignen sich in der Regel die üblichen heizbaren Homogenisierapparate, z. B. Kneter oder, vorteilhaft bei kontinuierlichem Betrieb, Buss-Co-Kneter oder Doppelschneckenextruder. Alternativ dazu kann auch ein Einwellenextruder verwendet werden. Die Komponenten können dabei, jeweils für sich oder in Teilmischungen, in dem vorgegebenen Mengenverhältnis laufend dem auf eine Temperatur oberhalb des Schmelzpunkts des Basispolymers erhitzten Extruder zugeführt werden. Zweckmäßig lässt man die Temperatur zum Schneckenende hin ansteigen, um eine niedrigere Viskosität einzustellen und dadurch eine innige Durchmischung zu ermöglichen. Die Extrudate werden zweckmäßigerweise noch flüssig einer Vorrichtung zur Isolierung oder Ummantelung von elektrischen Leitern zugeführt. Die endgültige Vernetzung des gefüllten Polymers findet im Allgemeinen nach bekannter Art im Wasserbad, im Dampfbad, oder aber durch Luftfeuchtigkeit bei Umgebungstemperaturen (so genanntes "ambient curing") statt.

Die folgenden Beispiele sollen die Erfindung näher erläutern ohne den Schutzbereich zu beschränken.

### Beispiel 1

### Vernetzung von gefüllten, silanhaltigen HFFR-Compounds mit flüssiger ungesättigter Organosilanmischung und auf porösem Polyethylen oder gefällter Kieselsäure gebundener ungesättigter Organosilanmischung

Die Einsatzstoffe sind in Tabelle 1 zusammengestellt.

Die Herstellung der vernetzten und gefüllten Kabelcompounds wird unter Einsatz eines Einschnecken-Extruder (Fa. Thermo Haake, Karlsruhe, DE) vorgenommen (L/D-Verhältnis = 25, Schneckendurchmesser 20 mm, 30 U/min).

Zunächst werden die HFFR-Compounds in einem Umluftofen bei 70 °C mindestens eine Stunde getrocknet. Bei Verwendung von flüssigem Vinylsilan oder flüssiger Vinylsilanzubereitung wird dieses auf das HFFR-Compound gegeben und innerhalb einer Stunde einwirken lassen. Wird das Silan dagegen als "Dry Liquid" eingesetzt, so wird das HFFR-Compound damit vermischt.

Die Zugabe erfolgt über die gefüllte Einzugszone. Die Temperatur im Extruder steigt von der Einzugszone bis zum Schneckenende von 135 auf 170 °C. Die Verweilzeit beträgt maximal 150 Sekunden. Es werden Bänder extrudiert, aus denen Prüfkörper hergestellt werden. Die Prüfkörper werden in einem Wasserbad bei 80 °C über einen Zeitraum > 6 Stunden vernetzt. Die Ergebnisse aus den jeweiligen Versuchen sind Tabelle 2 zu entnehmen. Diesbezügliche Analyseverfahren gehen aus Tabelle 3 hervor.

**Tabelle 1**

| **Definitionen und Einsatzstoffe:** | | | |
|---|---|---|---|
| **Bezeichnung** | **Beschreibung** | | |
| Compound 1 | D97/2/24 (silanhaltig, Füllstoff MDH); Fa. Scapa Polymerics | | |
| Compound 2 | Megolon S 500 (silanhaltig, Füllstoff ATH); Fa. Scapa Polymerics | | |
| Compound 3 | ECCOH 1092 (silanhaltig, Füllstoff MDH); Fa. PolyOne | | |
| Trägermaterial 1 | Accurel M500 (EVA, VA-Gehalt = 5 %); Fa. Membrana | | |
| Trägermaterial 2 | Ultrasil VN3, Fällungskieselsäure Degussa AG | | |
| Silan 1 | VTMO (Vinyltrimethoxysilan), Fa. Degussa AG | | |
| Silan 2 | VTEO (Vinyltriethoxysilan), Fa. Degussa AG | | |
| Zubereitung 1 | Silan 1 | 95,5 % | |
| | DCUP | 1,5 % | |
| | DBTL | 3,0 % | |
| Zubereitung 2 | Silan 1 | 92,5 % | |
| | DHBP | 4,5 % | |
| | DBTL | 3,0 % | |
| Zubereitung 3 | Silan 2 | 96,5 % | |
| | BCUP | 1,5 % | |
| | DBTL | 2,0 % | |
| DCUP | Dicumylperoxid, Fa. Peroxid Chemie | | |
| DHBP | 2,5-Dimethyl-2,5-di-(tert.-butylperoxy)-hexan, Fa. Peroxid Chemie | | |
| BCUP | tert.-Butylcumylperoxid, Fa. Peroxid Chemie | | |
| DBTL | Dibutylzinndilaurat, Fa. Th. Goldschmidt | | |
| HFFR | Halogen Free Flame Retardant | | |
| MDH | Magnesiumdihydroxid | | |
| ATH | Aluminiumtrihydroxid | | |
| EVA | Ethylen-Vinylacetat-Copolymer | | |
| VA | Vinylacetat | | |

**Tabelle 2**

| **Von den gemäß Beispiel 1 hergestellten Prüfkörpern und einem Vergleichsversuch^{*)} wurden folgende materialcharakteristischen Werte ermittelt:** | | | | | | | | |
|---|---|---|---|---|---|---|---|---|
| | | | | "Dry Liquid" | | | | |
| Zubereitung | HFFR-Compound | Trägermaterial | flüssig [Tle] | Gehalt der Zubereitung auf Trägermaterial [%] | Zugabemenge [Tle] | Hot-Set [%] | Zugfestigkeit [N/mm²] | Bruchdehnung [%] |
| 3 | 2 | 1 | - | 45 | 3 | 75 | 12,9 | 165 |
| 1 | 1 | 2 | - | 75 | 2 | 80 | 8,4 | 320 |
| 2 | 3 | 1 | - | 45 | 1,6 | 70 | 17,5 | 240 |
| - | 1^{*)} | - | - | - | - | gerissen | 9,0 | 550 |

**Tabelle 3**

| **Analyseverfahren** | | |
|---|---|---|
| MFR (190°C, 2,16 kg) | [g/10min] | DIN 1133 |
| Hot-Set (200°C/15 min/20 N/cm²) | [%] | EN ISO 60811-2-1 |
| Zugfestigkeit | [N/mm²] | EN ISO 527 |
| Bruchdehnung | [%] | EN ISO 527 |
| Blasenbildung | [-] | optische Bewertung |

### Beispiel 2

### Vernetzung von gefüllten HFFR-Compounds durch optimierte Rezeptur und Minimierung der negativen "Blasenbildung" auf der Kabeloberfläche

Während der Bandextrusion trat bei bestimmten Kombinationen HFFR-Compound/Organosilanmischung unerwünschte und nachteilige Blasenbildung auf der Extrudatoberfläche auf. Deshalb wurden nach dem oben beschriebenen Verfahren der Silanaufbringung (Vortrocknung des Compounds bei 70 °C über einen Zeitraum von > 1 Stunde und Zugabe der Vinylsilanmischung auf das Compound mit anschließendem einstündigem Absorbtionsschritt) Compound/Organosilan-Variationen (100 Tle Compound und 1 Tle Organosilan) durchgeführt. Zusätzlich wurden die Extruderdrehzahlen (30 bis 60 rpm) und Schmelztemperaturen (170 bis 180°C) verändert. Die Extrusion erfolgte auf einem Einschnecken-Extruder, mit L/D-Verhältnis = 25, Schneckendurchmesser 20 mm (Fa. Thermo Haake, Karlsruhe, DE). Extrudiert wurden Bänder. Als HFFR-Compound wurde ein Compound mit MDH als Füllstoff ausgewählt, um den Einfluss einer möglichen Füllstoffzersetzung auszuschließen (Zerfallstemperatur MDH > 300 °C), vgl. Tabellen 1 und 4.

**Tabelle 4**

| | | | | |
|---|---|---|---|---|
| **Versuche und Ergebnisse aus Beispiel 2** | | | | |

| Compound | Silan | Drehzahl [rpm] | Schmelztemperatur [°C] | Blasenbildung [-] |
|---|---|---|---|---|
| 1 | 1 | 30 | 170 | 0,25 |
| | | | 180 | 0,5 |
| | | 60 | 170 | 1 |
| | | | 180 | 1 |
| | 2 | 30 | 170 | 0 |
| | | | 180 | 0,25 |
| | | 60 | 170 | 0 |
| | | | 180 | 0,25 |

| | | | | |
|---|---|---|---|---|
| Als Bewertungskriterien wurde definiert: 0 = keine Blasenbildung, glatte Oberfläche (OF); 0,25 = kaum sichtbare Blasen, OF leicht rau; 0,5 = gut sichtbare Blasenbildung, raue OF; 1 = starke Blasenbildung, zerstörte OF | | | | |

Überraschenderweise zeigte sich, dass die Blasenbildung in erheblichem Maße von der Wahl des verwendeten Silantyps abhängt. Durch Verwendung von Silan 2 wird eine signifikante Unempfindlichkeit des HFFR-Compounds gegenüber mechanischer und thermischer Initiierung der Blasenbildung bei der Herstellung der Kabelcompounds erreicht.

## Patentansprüche

1. Verwendung mindestens eines auf einem Trägerstoff gebundenen, ungesättigten Organosilans oder einer Zubereitung, die (i) mindestens ein auf einem Trägerstoff gebundenes, ungesättigtes Organosilan, (ii) mindestens eine Erzeugersubstanz für freie Radikale (ESR) und (iii) gegebenenfalls einen Vernetzungskatalysator enthält, für die Herstellung feuchtigkeitsvernetzter und gefüllter Kabelcompounds, welche ein thermoplastisches Basispolymer und einen mineralischen Füllstoff enthalten,
wobei der Trägerstoff für das ungesättigte Organosilan ein poröses Polymer ist, ausgewählt aus der Reihe Polypropylen, Polyolefine, Etylen-Copolymer mit an Kohlenstoff armen Alkenen, Ethylen-Vinylacetat-Copolymer, Polyethylen mit hoher Dichte, Polyethylen mit geringer Dichte oder linearem Polyethylen mit geringer Dichte und das poröse Polymer ein Porenvolumen von 30 bis 90 % aufweist, oder
der Trägerstoff für die Organosilankomponente eine pyrogene Kieselsäure, eine gefällte Kieselsäure, Calciumsilikat, ein Wachs oder Ruß ist.

2. Verwendung nach Anspruch 1,
wobei man bei der Herstellung eines solchen feuchtigkeitsvernetzten, gefüllten Kabelcompounds
(a) mindestens ein thermoplastisches Basispolymer, eine ESR, einen mineralischen Füllstoff, einen Vernetzungskatalysator und ein ungesättigtes Organosilan oder
(b) mindestens ein thermoplastisches Basispolymer, einen mineralischen Füllstoff, einen Vernetzungskatalysator und eine Organosilan- und ESR-haltige Zubereitung oder
(c) mindestens ein thermoplastisches Basispolymer, einen mineralischen Füllstoff und eine Organosilan-, ESR- und Vernetzungskatalysator-haltige Zubereitung oder
(d) mindestens ein bereits gefülltes, gegebenenfalls silanhaltiges Compound eines thermoplastischen Basispolymers, eine ESR, einen Vernetzungskatalysator und ein ungesättigtes Organosilan oder
(e) mindestens ein bereits gefülltes, gegebenenfalls silanhaltiges Compound eines thermoplastischen Basispolymers, einen Vernetzungskatalysator und eine Organosilan- und ESR-haltigen Zubereitung oder
(f) mindestens ein bereits gefülltes, gegebenenfalls silanhaltiges Compound eines thermoplastischen Basispolymers und eine Organosilan-, ESR- und Vernetzungskatalysator-haltige Zubereitung
als Eduktkomponenten einsetzt.

3. Verwendung nach Anspruch 1 oder 2, wobei das ungesättigte Organosilan ausgewählt wird aus der Reihe Vinyltriethoxysilan, Vinyltrimethoxysilan, Vinyltri-i-propoxysilan, Vinyltri-n-propoxysilan, Vinyl-iso-butoxysilan, 3-Methacryloxypropyltrimethoxysilan.

4. Verwendung nach einem der Ansprüche 1 bis 3, wobei man das ungesättigte Organosilan in einer Menge von 0,1 bis 10 Gew.-%, bezogen auf das Gesamtgewicht des feuchtigkeitsvernetzten und gefüllten Kabelcompounds, einsetzt.

5. Verwendung nach einem der Ansprüche 1 bis 4, wobei man die Organosilanhaltige Zubereitung in einer Menge von 0,5 bis 3 Gew.-%, bezogen auf das Gesamtgewicht des gefüllten Kabelcompounds, einsetzt.

6. Verwendung nach einem der Ansprüche 1 bis 5, wobei man als ESR-Komponente mindestens eine Erzeugersubstanz für freie Radikale in einer Menge von 0,01 bis 0,4 Gew.-%, bezogen auf das Gesamtgewicht des Kabelcompounds, einsetzt.

7. Verwendung nach einem der Ansprüche 1 bis 6, wobei man die Erzeugersubstanz für freie Radikale (ESR) aus der Gruppe Dicumylperoxid, tert.-Butylperoxidpivalat, Di-tert.-butylperoxid, tert.-Butylperoxy-2-ethylhexanoat oder tert.-Butyl-cumylperoxid auswählt.

8. Verwendung nach einem der Ansprüche 1 bis 7, wobei man als Vernetzungskatalysator eine metallorganische Verbindung aus der Reihe Dibutylzinndilaurat, Dioctylzinndilaurat oder Zinn(II)octanoat einsetzt.

9. Verwendung nach einem der Ansprüche 1 bis 7, wobei der Vernetzungskatalysator in einer Menge von 0,005 bis 0,2 Gew.-%, bezogen auf das Gesamtgewicht des Kabelcompounds, eingesetzt wird.

10. Verwendung nach Anspruch 1, wobei das poröse Polymer in Pellet-Form eingesetzt wird.

11. Verwendung nach Anspruch 1, wobei das Wachs ein Polyolefinwachs auf Basis LDPE ("Low density Polyethylen") ist.

12. Verwendung nach einem der Ansprüche 1 bis 11, wobei die Menge des Trägerstoffs für die Organosilankomponente von 0,7 bis 7 Gew.-%, bezogen auf das Gewicht des feuchtigkeitsvernetzten und gefüllten Kabelcompounds, beträgt.

13. Verwendung nach einem der Ansprüche 1 bis 12, wobei der Trägerstoff die ungesättigte Organosilankomponente einkapselt oder physikalisch oder chemisch gebunden hält.

14. Verwendung nach einem der Ansprüche 1 bis 13, wobei der mit der Organosilankomponente beladene Trägerstoff quellbar ist.

15. Verwendung nach einem der Ansprüche 1 bis 14, wobei das thermoplastische Basispolymer für die Herstellung des gefüllten und feuchtigkeitsvernetzten Kabelcompounds ein unpolares Polyolefin oder ein Polyvinylchlorid oder ein Copolymer aus einem oder mehreren Olefinen und einem oder mehreren Comonomeren, die polare Gruppen enthalten, ist.

16. Verwendung nach einem der Ansprüche 1 bis 15, wobei der für die Herstellung des feuchtigkeitsvernetzten und gefüllten Kabelcompounds eingesetzte Füllstoff ein Metallhydroxid mit stöchiometrischem oder substöchiometrischem Anteil an Hydroxylgruppen oder ein Metalloxid mit restlichen Hydroxylgruppen ist.

17. Verfahren zur Herstellung eines feuchtigkeitsvernetzten und gefüllten Kabelcompounds, das ein thermoplastisches Basispolymer und einen mineralischen Füllstoff enthält und bei dessen Herstellung mindestens ein auf einem Trägerstoff gebundenes, ungesättigtes Organosilan oder eine Zubereitung, die (i) mindestens ein auf einem Trägerstoff gebundenes, ungesättigtes Organosilan, (ii) mindestens eine Erzeugersubstanz für freie Radikale (ESR) und (iii) gegebenenfalls einen Vernetzungskatalysator enthält, verwendet wird, nach den Ansprüchen 1 bis 16, indem man
- mindestens ein thermoplastisches Compound und einen mineralischen Füllstoff oder mindestens ein bereits gefülltes, gegebenenfalls silanhaltiges, thermoplastisches Compound und
- mindestens einen Vernetzungskatalysator, mindestens eine Erzeugersubstanz für freie Radikale (ESR) und mindestens ein ungesättigtes Organosilan oder eine entsprechende Zubereitung aus den genannten Komponenten ungesättigtes Organosilan, ESR und/oder Vernetzungskatalysator einer Extrusionseinheit zuführt,
- die Extrusion, gegebenenfalls unter Zuführung eines metallischen Leiters oder Leiterbündel, durchführt und
- das Extrudat in Gegenwart von Feuchtigkeit vernetzt,
wobei der Trägerstoff für das ungesättigte Organosilan ein poröses Polymer ist, ausgewählt aus der Reihe Polypropylen, Polyolefine, Etylen-Copolymer mit an Kohlenstoff armen Alkenen, Ethylen-Vinylacetat-Copolymer, Polyethylen mit hoher Dichte, Polyethylen mit geringer Dichte oder linearem Polyethylen mit geringer Dichte und das poröse Polymer ein Porenvolumen von 30 bis 90 % aufweist, oder
der Trägerstoff für die Organosilankomponente eine pyrogene Kieselsäure, eine gefällte Kieselsäure, Calciumsilikat, ein Wachs oder Ruß ist.

18. Feuchtigkeitsvernetzte, gefüllte Kabelcompounds, die ein thermoplastisches Basispolymer und einen verstärkenden, streckenden oder flammhemmenden mineralischen Füllstoff enthalten, erhältlich gemäß einem der Ansprüche 1 bis 17.

19. Kabel, deren metallische Leiter mit einem feuchtigkeitsvernetzten, gefüllten Kabelcompound umhüllt und nach einem der Ansprüche 1 bis 17 erhältlich sind.

20. Kabel, deren Leiterbündel oder deren isolierte Leiterbündel mit einem feuchtigkeitsvernetzten, gefüllten Kabelcompound ummantelt und nach einem der Ansprüche 1 bis 17 erhältlich sind.

## Claims

1. Use of at least one carrier-bound unsaturated organosilane, or of a preparation which comprises
(i) at least one carrier-bound, unsaturated organosilane, (ii) at least one free-radical generator (FRG), and (iii) where appropriate a crosslinking catalyst, for the production of moisture-crosslinked and filled cable compounds which comprise a thermoplastic base polymer and a mineral filler,
where the carrier for the unsaturated organosilane is a porous polymer selected from the series polypropylene, polyolefins, ethylene copolymer with low-carbon-number alkenes, ethylene-vinyl acetate copolymer, high-density polyethylene, low-density polyethylene, and linear low-density polyethylene and the porous polymer has a pore volume of from 30 to 90%,
or the carrier for the organosilane component is a fumed silica, a precipitated silica, calcium silicate, a wax or carbon black.

2. Use according to Claim 1,
where the starting components used during the production of such a moisture-crosslinked, filled cable compound comprise
(a) at least one thermoplastic base polymer, an FRG, a mineral filler, a crosslinking catalyst, and an unsaturated organosilane, or
(b) at least one thermoplastic base polymer, a mineral filler, a crosslinking catalyst, and an organosilane- and FRG-containing preparation, or
(c) at least one thermoplastic base polymer, a mineral filler, and an organosilane-, FRG-, and crosslinking-catalyst-containing preparation, or
(d) at least one prefilled, where appropriate silane-containing thermoplastic base polymer compound, an FRG, a crosslinking catalyst, and an unsaturated organosilane, or
(e) at least one prefilled, where appropriate silane-containing thermoplastic base polymer compound, a crosslinking catalyst, and an organosilane- and FRG-containing preparation, or
(f) at least one prefilled, where appropriate silane-containing thermoplastic base polymer compound, and an organosilane-, FRG-, and crosslinking-catalyst-containing preparation.

3. Use according to Claim 1 or 2, where the unsaturated organosilane is selected from the series vinyltriethoxysilane, vinyltrimethoxysilane, vinyltriisopropoxysilane, vinyltri-n-propoxysilane, vinylisobutoxysilane, 3-methacryloxypropyltrimethoxysilane.

4. Use according to any of Claims 1 to 3, where the amount used of the unsaturated organosilane is from 0.1 to 10% by weight, based on the total weight of the moisture-crosslinked and filled cable compound.

5. Use according to any of Claims 1 to 4, where the amount used of the organosilane-containing preparation is from 0.5 to 3% by weight, based on the total weight of the filled cable compound.

6. Use according to any of Claims 1 to 5, where the FRG component used comprises from 0.01 to 0.4% by weight, based on the total weight of the cable compound, of at least one free-radical generator.

7. Use according to any of Claims 1 to 6, where the free-radical generator (FRG) is selected from the group consisting of dicumyl peroxide, tert-butyl peroxypivalate, di-tert-butyl peroxide, tert-butyl 2-ethylperoxyhexanoate, and tert-butyl cumyl peroxide.

8. Use according to any of Claims 1 to 7, where the crosslinking catalyst used comprises an organometallic compound from the series dibutyltin dilaurate, dioctyltin dilaurate, and stannous octanoate.

9. Use according to any of Claims 1 to 7, where the amount used of the crosslinking catalyst is from 0.005 to 0.2% by weight, based on the total weight of the cable compound.

10. Use according to Claim 1, where the porous polymer is used in pellet form.

11. Use according to Claim 1, where the wax is a polyolefin wax based on LDPE (low-density polyethylene).

12. Use according to any of Claims 1 to 11, where the amount of the carrier for the organosilane component is from 0.7 to 7% by weight, based on the weight of the moisture-crosslinked and filled cable compound.

13. Use according to any of Claims 1 to 12, where the carrier binds the unsaturated organosilane component by encapsulating it, or physically, or chemically.

14. Use according to any of Claims 1 to 13, where the carrier loaded with the organosilane component is swellable.

15. Use according to any of Claims 1 to 14, where the thermoplastic base polymer for producing the filled and moisture-crosslinked cable compound is a non-polar polyolefin or a polyvinyl chloride, or a copolymer made from one or more olefins and from one or more comonomers which contain polar groups.

16. Use according to any of Claims 1 to 15, where the filler used for producing the moisture-crosslinked and filled cable compound is a metal hydroxide with a stoichiometric or substoichiometric proportion of hydroxy groups, or is a metal oxide with residual hydroxy groups.

17. Process for producing a moisture-crosslinked and filled cable compound which comprises a thermoplastic base polymer and a mineral filler, and the production of which uses at least one carrier-bound, unsaturated organosilane or one preparation which comprises (i) at least one carrier-bound, unsaturated organosilane, (ii) at least one free-radical generator (FRG), and (iii) where appropriate a crosslinking catalyst, according to any of Claims 1 to 16, by
- introducing at least one thermoplastic compound and one mineral filler, or at least one prefilled, where appropriate silane-containing, thermoplastic compound, and
- at least one crosslinking catalyst, at least one free-radical generator (FRG), and at least one unsaturated organosilane, or a corresponding preparation made from the components mentioned: unsaturated organosilane, FRG, and/or crosslinking catalyst, to an extrusion unit,
- extruding, where appropriate with introduction of a metallic conductor or conductor bundle, and
- crosslinking the extrudate in the presence of moisture,
where the carrier for the unsaturated organosilane is a porous polymer selected from the series polypropylene, polyolefins, ethylene copolymer with low-carbon-number alkenes, ethylene-vinyl acetate copolymer, high-density polyethylene, low-density polyethylene, and linear low-density polyethylene and the porous polymer has a pore volume of from 30 to 90%, or
the carrier for the organosilane component is a fumed silica, a precipitated silica, calcium silicate, a wax or carbon black.

18. Moisture-crosslinked, filled cable compounds which comprise a thermoplastic base polymer and a reinforcing, extending, or flame-retardant mineral filler, obtainable according to any of Claims 1 to 17.

19. Cables whose metallic conductors have been sheathed by a moisture-crosslinked, filled cable compound, and which are obtainable according to any of Claims 1 to 17.

20. Cables whose conductor bundles or whose isolated conductor bundles have been jacketed by a moisture-crosslinked, filled cable compound, and which are obtainable according to any of Claims 1 to 17.

## Revendications

1. Utilisation d'au moins un organosilane insaturé relié sur un support ou d'une préparation qui contient (i) au moins un organosilane insaturé relié sur un support, (ii) au moins un générateur de radicaux libres (ESR) et (iii) éventuellement un catalyseur de réticulation, pour la fabrication de mélanges isolants pour câbles réticulés à l'humidité et chargés, qui contiennent un polymère de base thermoplastique et une charge minérale,
dans laquelle le support pour l'organosilane insaturé est un polymère poreux choisi dans la série constituée par le polypropylène, les polyoléfines, un copolymère d'éthylène avec des alcènes pauvres en carbone, un copolymère d'éthylène-acétate de vinyle, le polyéthylène haute densité, le polyéthylène basse densité ou le polyéthylène linéaire basse densité, et le polymère poreux présente un volume poreux de 30 à 90 %, ou
le support pour le composant organosilane est une silice pyrogénée, une silice précipitée, du silicate de calcium, une cire ou un noir de carbone.

2. Utilisation selon la revendication 1, dans laquelle
(a) au moins un polymère de base thermoplastique, un ESR, une charge minérale, un catalyseur de réticulation et un organosilane insaturé, ou
(b) au moins un polymère de base thermoplastique, une charge minérale, un catalyseur de réticulation et une préparation contenant un organosilane et un ESR, ou
(c) au moins un polymère de base thermoplastique, une charge minérale et une préparation contenant un organosilane, un ESR et un catalyseur de réticulation, ou
(d) au moins un mélange déjà chargé, contenant éventuellement un silane, d'un polymère de base thermoplastique, un ESR, un catalyseur de réticulation et un organosilane insaturé, ou
(e) au moins un mélange déjà chargé, contenant éventuellement un silane, d'un polymère de base thermoplastique, un catalyseur de réticulation et une préparation contenant un organosilane et un ESR, ou
(f) au moins un mélange déjà chargé, contenant éventuellement un silane, d'un polymère de base thermoplastique et une préparation contenant un organosilane, un ESR et un catalyseur de réticulation, sont utilisés en tant que composants réactifs lors de la fabrication d'un tel mélange isolant pour câbles réticulé à l'humidité et chargé.

3. Utilisation selon la revendication 1 ou 2, dans laquelle l'organosilane insaturé est choisi dans la série constituée par le vinyltriéthoxysilane, le vinyltriméthoxysilane, le vinyltri-i-propoxysilane, le vinyltri-n-propoxysilane, le vinyl-iso-butoxysilane, le 3-méthacryloxypropyltriméthoxysilane.

4. Utilisation selon l'une quelconque des revendications 1 à 3, dans laquelle l'organosilane insaturé est utilisé en une quantité de 0,1 à 10 % en poids par rapport au poids total du mélange isolant pour câbles réticulé à l'humidité et chargé.

5. Utilisation selon l'une quelconque des revendications 1 à 4, dans laquelle la préparation contenant un organosilane est utilisée en une quantité de 0,5 à 3 % en poids par rapport au poids total du mélange isolant pour câbles chargé.

6. Utilisation selon l'une quelconque des revendications 1 à 5, dans laquelle au moins un générateur de radicaux libres est utilisé en tant que composant ESR en une quantité de 0,01 à 0,4 % en poids par rapport au poids total du mélange isolant pour câbles.

7. Utilisation selon l'une quelconque des revendications 1 à 6, dans laquelle le générateur de radicaux libres (ESR) est choisi dans le groupe constitué par le peroxyde de dicumyle, le peroxypivalate de tert.-butyle, le peroxyde de di-tert.-butyle, le peroxy-2-éthylhexanoate de tert.-butyle ou le peroxyde de tert.-butyl-cumyle.

8. Utilisation selon l'une quelconque des revendications 1 à 7, dans laquelle un composé métallo-organique de la série constituée par le dilaurate de dibutylétain, le dilaurate de dioctylétain ou l'octanoate d'étain(II) est utilisé en tant que catalyseur de réticulation.

9. Utilisation selon l'une quelconque des revendications 1 à 7, dans laquelle le catalyseur de réticulation est utilisé en une quantité de 0,005 à 0,2 % en poids par rapport au poids total du mélange isolant pour câbles.

10. Utilisation selon la revendication 1, dans laquelle le polymère poreux est utilisé sous la forme de granulés.

11. Utilisation selon la revendication 1, dans laquelle la cire est une cire de polyoléfine à base de LDPE (« Low density Polyethylen »).

12. Utilisation selon l'une quelconque des revendications 1 à 11, dans laquelle la quantité du support pour le composant organosilane est de 0,7 à 7 % en poids par rapport au poids du mélange isolant pour câbles réticulé à l'humidité et chargé.

13. Utilisation selon l'une quelconque des revendications 1 à 12, dans laquelle le support encapsule ou maintient relié physiquement ou chimiquement le composant organosilane insaturé.

14. Utilisation selon l'une quelconque des revendications 1 à 13, dans laquelle le support chargé avec le composant organosilane est gonflable.

15. Utilisation selon l'une quelconque des revendications 1 à 14, dans laquelle le polymère de base thermoplastique pour la fabrication du mélange isolant pour câbles chargé et réticulé à l'humidité est une polyoléfine apolaire ou un polychlorure de vinyle ou un copolymère d'une ou de plusieurs oléfines et d'un ou de plusieurs comonomères contenant des groupes polaires.

16. Utilisation selon l'une quelconque des revendications 1 à 15, dans laquelle la charge utilisée pour la fabrication du mélange isolant pour câbles réticulé à l'humidité et chargé est un hydroxyde métallique ayant une proportion stoechiométrique ou sous-stoechiométrique de groupes hydroxyle ou un oxyde métallique comprenant des groupes hydroxyle résiduels.

17. Procédé de fabrication d'un mélange isolant pour câbles réticulé à l'humidité et chargé, qui contient un polymère de base thermoplastique et une charge minérale, et lors de la fabrication duquel au moins un organosilane insaturé relié sur un support ou une préparation qui contient (i) au moins un organosilane insaturé relié sur un support, (ii) au moins un générateur de radicaux libres (ESR) et (iii) éventuellement un catalyseur de réticulation, est utilisé, selon les revendications 1 à 16, selon lequel
- au moins un mélange thermoplastique et une charge minérale ou au moins un mélange thermoplastique déjà chargé, contenant éventuellement un silane, et
- au moins un catalyseur de réticulation, au moins un générateur de radicaux libres (ESR) et au moins un organosilane insaturé ou une préparation correspondante des composants mentionnés organosilane insaturé, ESR et/ou catalyseur de réticulation sont introduits dans une unité d'extrusion,
- l'extrusion est réalisée, éventuellement avec introduction d'un conducteur ou conducteur en faisceau métallique, et
- l'extrudat est réticulé en présence d'humidité,
dans lequel le support pour l'organosilane insaturé est un polymère poreux choisi dans la série constituée par le polypropylène, les polyoléfines, un copolymère d'éthylène avec des alcènes pauvres en carbone, un copolymère d'éthylène-acétate de vinyle, le polyéthylène haute densité, le polyéthylène basse densité ou le polyéthylène linéaire basse densité, et le polymère poreux présente un volume poreux de 30 à 90 %, ou
le support pour le composant organosilane est une silice pyrogénée, une silice précipitée, du silicate de calcium, une cire ou un noir de carbone.

18. Mélanges isolants pour câbles chargés, réticulés à l'humidité, qui contiennent un polymère de base thermoplastique et une charge minérale renforçante, diluante ou ignifugeante, pouvant être obtenus selon l'une quelconque des revendications 1 à 17.

19. Câbles, dont les conducteurs métalliques sont enrobés avec un mélange isolant pour câbles réticulé à l'humidité et chargé, et peuvent être obtenus selon l'une quelconque des revendications 1 à 17.

20. Câbles, dont les conducteurs en faisceaux ou dont les conducteurs en faisceaux isolés sont gainés avec un mélange isolant pour câbles réticulé à l'humidité et chargé, et peuvent être obtenus selon l'une quelconque des revendications 1 à 17.
